# DEMANDE DE BREVET EUROPEEN

(11) **EP 2 026 272 A1**
(43) Date de publication de la demande: **18.02.2009**
(21) Numéro de dépôt: 07301301.3
(22) Date de dépôt: 09.08.2007
(51) Int. Cl.: G06Q 30/00

(54) **Système et procédé de gestion d'offres promotionnelles à destination de consommateurs situés a proximité d'étalages d'un centre commercant**

(71) Demandeur: Alcatel Lucent, 75008 Paris (FR)
(72) Inventeur: Hedarchet, Stéphane, 75017, Paris (FR)
(74) Mandataire: Hedarchet, Stéphane

(57) **Abrégé**

L'invention concerne un système de gestion d'offres promotionnelles à destination de consommateurs situés à proximité d'étalages d'un centre commerçant, caractérisé en ce qu'il comporte :
- des moyens de mémorisation (1) d'une liste d'achats d'articles de consommation prévue par au moins un consommateur,
- au moins un panier de chargement (2) destiné à contenir des articles de consommation situé sur des étalages (10) du centre commerçant,
- des moyens de localisation du consommateur (PD, 8, 9, 11) portant le panier,
- des moyens de détermination (12) d'offres promotionnelles en fonction de la localisation du panier et de la liste d'achats des articles de consommation prévue,
- et des moyens d'interfaçage (7) Homme-Machine de restitution de ces offres promotionnelles.

## Description

La présente invention est relative à un système de gestion d'offres promotionnelles à destination de consommateurs situés à proximité d'étalages d'un centre commerçant. Elle concerne également un serveur de traitement de telles offres promotionnelles à destination de consommateurs pour des promotions ciblées, un panier de chargement ainsi qu'une méthode de gestion d'offres promotionnelles à destination de consommateurs situés à proximité d'étalages d'un centre commerçant à de fins de promotions ciblées. Elle présente un intérêt particulier pour de promotions ciblées à destination de consommateurs se situant dans des centres commerciaux, des hypermarchés, ou tout autre endroit commerçant présentant des étalages d'articles de grande consommation.

Il est courant de préparer une liste d'achats (appelée également liste de courses) avant d'aller sur place en magasin pour acheter les articles selon les recommandations de la liste préparée à l'avance. Cette liste préparée à l'avance sert souvent de pense-bête pour ne rien oublier sur le champ.

Récemment, la société Palm Inc., qui commercialise des assistants personnels numériques (PDA en anglais pour "Personal Digital Assistant"), a développé un logiciel Handyshopper™ qui incorpore un programme de gestion de liste de course. La première phase d'utilisation du logiciel consiste à rentrer la liste de tous les articles que le consommateur a l'habitude d'acheter. Ensuite, il suffit de sélectionner seulement les articles qu'il souhaite acheter lors de son prochain passage en magasin, ceci pour réduire l'encombrement d'affichage sur son assistant. Il est également possible de classer les articles par catégories afin de faciliter les achats par rayon (rayon des légumes, rayon des conserves, etc.), ou bien par magasin. A chaque fiche produit peut être associé : le prix, la quantité, le magasin, etc.

Cependant, ce logiciel intégré à l'assistant personnel numérique est un logiciel propriétaire qui ne permet aucune interaction avec un système extérieur informant de données personnalisées en temps réel.

La présente invention a pour objectif de pallier ce problème.
A cet effet, l'invention a pour objet un système de gestion d'offres promotionnelles à destination de consommateurs situés à proximité d'étalages d'un centre commerçant, caractérisé en ce qu'il comporte :
- des moyens de mémorisation d'une liste d'achats d'articles de consommation prévue par au moins un consommateur,
- au moins un panier de chargement destiné à contenir des articles de consommation situé sur des étalages du centre commerçant,
- des moyens de localisation du consommateur portant le panier,
- des moyens de détermination d'offres promotionnelles en fonction de la localisation du panier et de la liste d'achats des articles de consommation prévue,
- et des moyens d'interfaçage Consommateur-Machine de restitution de ces offres promotionnelles.

Ainsi, le système selon l'invention permet au consommateur de recevoir des offres promotionnelles personnalisées, i.e tenant compte de sa localisation courante et des articles qu'il avait prévu d'acheter, ceci en temps réel.

Selon un mode de réalisation, les moyens de localisation du consommateur comprennent des moyens d'identification du consommateur logés dans le panier, et des moyens de détection de la proximité du panier avec un étalage.

Selon un mode de réalisation, les moyens d'identification du consommateur comprennent un lecteur de carte de fidélité du consommateur auprès du centre commerçant.

Selon un mode de réalisation, les moyens de détection de la proximité du panier avec l'étalage utilisent la technologie RFID.

Selon un mode de réalisation, les moyens de mémorisation de la liste d'achats d'articles de consommation prévue par le consommateur comprennent un dispositif numérique appartenant au consommateur et apte à coopérer avec des premiers moyens de traitement du panier.

Selon un mode de réalisation, les moyens de mémorisation de la liste d'achats d'articles de consommation prévue par le consommateur comprennent un site web du centre commerçant comprenant des moyens de traitement d'un compte personnel au consommateur pour mémoriser ladite liste d'achats.

Selon un mode de réalisation, les premiers moyens de traitement sont agencés pour émettre, lors de la détection de la proximité du panier avec un étalage, un message comportant un identifiant du consommateur et la liste d'achats initialement mémorisée dans le dispositif numérique.

Selon un mode de réalisation, les moyens de détection de la proximité du panier avec l'étalage comprennent des seconds moyens de traitement logés dans ledit étalage et aptes à inclure audit message un identifiant de localisation de la détection.

Selon un mode de réalisation, les moyens de détermination d'offres promotionnelles comprennent des troisièmes moyens de traitement agencés pour déterminer les offres promotionnelles personnalisées en fonction, d'une part, de la liste d'achats préétablies par le consommateur et, d'autre part, des articles se situant dans son proche voisinage.

Selon un mode de réalisation, les troisièmes moyens de traitement sont agencés pour déterminer les offres promotionnelles personnalisées en fonction également de données de profil incluant des articles qui ont fait l'objet de précédents achats par le consommateur.

Selon un mode de réalisation, les troisièmes moyens de traitement sont agencés pour déterminer les offres promotionnelles personnalisées en fonction des données de profil lorsque la liste d'achats du consommateur n'est pas récupérable ou n'a pas été fournie par le consommateur au préalable.

L'invention a également pour objet un procédé de gestion d'offres promotionnelles à destination de consommateurs situés à proximité d'étalages d'un centre commerçant, caractérisé en ce que le procédé comporte les étapes suivantes :
- une étape de mémorisation d'une liste d'achats d'articles de consommation prévue par au moins un consommateur,
- une étape de fourniture d'au moins un panier de chargement au consommateur et destiné à contenir des articles de consommation situé sur des étalages du centre commerçant,
- une étape de localisation du consommateur portant le panier,
- une étape de détermination d'offres promotionnelles en fonction de la localisation du panier et de la liste d'achats des articles de consommation prévue,
- une étape de restitution de ces offres promotionnelles via des moyens d'interfaçage Consommateur-Machine.

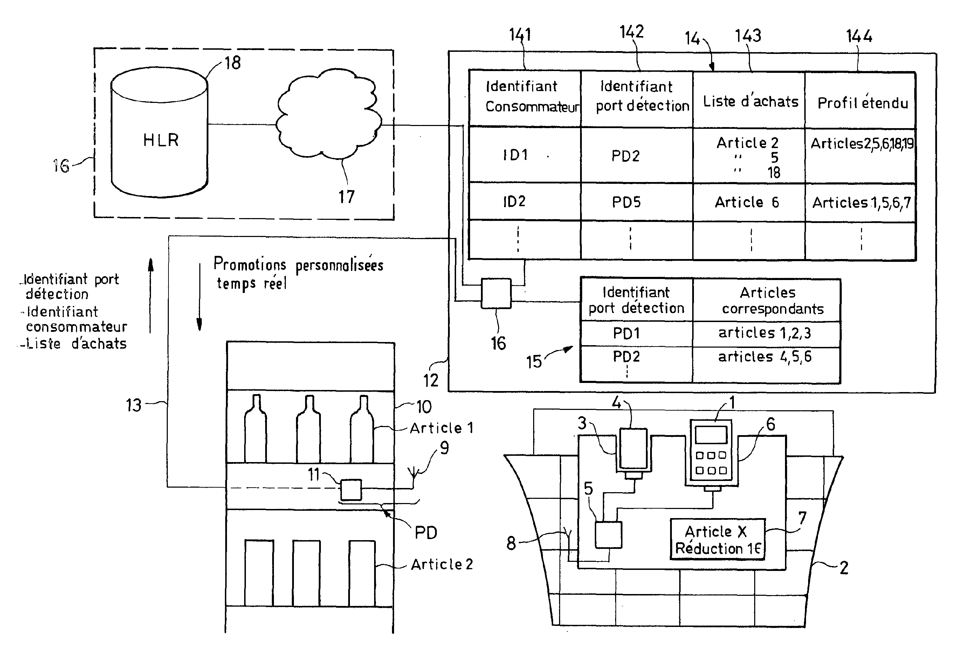

D'autres caractéristiques et avantages de l'invention apparaîtront à l'examen de la description détaillée ci-après, et du dessin annexé qui pourra non seulement servir à compléter l'invention, mais aussi contribuer à sa définition, le cas échéant :
Le dessin annexé consiste en une figure 1 qui illustre de façon très schématique un système de gestion de données personnalisées à destination d'un panier de chargement porté par un consommateur situé au sein d'un centre commerçant comportant des étalages, ceci selon un mode de réalisation de l'invention.

Il est illustré sur la figure 1 un système selon un mode de réalisation de l'invention.

Il est courant qu'à la maison, comme expliqué ci-dessus, le consommateur prépare, grâce à un programme approprié installé sur son assistant numérique personnel ou son téléphone mobile 1, une liste d'achats d'articles.

Un fois cette liste d'achats enregistrée dans son téléphone mobile 1, le consommateur se rend dans le centre commerçant qui peut être, par exemple, de façon non limitative, un grand magasin d'alimentation ou hypermarché. Il prend alors à la main un panier de chargement 2 destiné à charger les articles que le consommateur prévoit d'acheter lors de son parcours dans l'hypermarché. Ce panier est pourvu d'un premier logement 3 destiné à recevoir une carte de fidélité nominative du magasin 4 ou toute autre carte d'identification du consommateur. Ce logement d'insertion de carte est adapté pour connecter la carte à un microprocesseur interne 5 qui permet de traiter les données enregistrées sur la carte 4. Le panier 2 est également d'un second logement 6 destiné à recevoir le téléphone 1 du consommateur. Ce second logement d'insertion du téléphone est relié au microprocesseur interne 5. Un protocole préétabli de communication est prévu entre le téléphone et le microprocesseur qui permette de traiter les données enregistrées dans le programme de gestion de liste d'achats du téléphone vers le microprocesseur 5. Le microprocesseur est également relié à un écran graphique 7, éventuellement équipé d'un haut-parleur, ceci pour permettre la restitution, de manière graphique et/ou sonores, d'offres ou coupons promotionnels qui feront l'objet de plus de détails dans la suite.

Le microprocesseur 5 est relié à un port de communication sans fil pourvu d'une antenne de communication 8. Cette antenne de communication 8 est une antenne passive et est destinée à interagir lorsqu'elle est à proximité d'une antenne active de communication 9 équipant un étalage 10 et fonctionnant selon le même protocole de communication. Pour que l'invention soit efficace, il faut que le protocole utilisé soit un protocole de communication sans fil à courte portée, du type RFID, Bluetooth, Infrarouge ou équivalents. De la sorte, ce n'est qu'au voisinage très proche de l'étalage que l'offre promotionnelle correspondant à l'article que porte l'étalage est transmise vers l'écran graphique.

Le panier étant à proximité de la puce RFID 11 reliée à l'antenne 9, la puce 11 détecte la présence du panier. Il s'établit alors un protocole de transmission d'un paquet de données ou un message comportant l'identifiant du consommateur ainsi que de sa liste d'achats associée. Ce paquet est transmis vers un serveur 12 de gestion d'offres promotionnelles personnalisées. Ce paquet est transmis avec un entête comportant un identifiant du port de détection PD (correspondant à la puce RFID) ayant détecté le panier. Cet identifiant du port de détection PD permettra, comme il sera vu dans la suite, d'identifier la localisation du panier.

Selon une variante non représentée de l'invention, afin de réduire l'encombrement dû au port du téléphone mobile et d'éviter l'installation d'une station portative du téléphone au sein du panier de chargement, le serveur 12 est relié au réseau Internet et il est possible pour le consommateur de se connecter via son ordinateur personnel à un site web du centre commerçant dans lequel il prévoit d'effectuer ses achats et de mémoriser la liste d'achats sur le compte personnel. Ainsi, lorsqu'il est identifié par les moyens d'identification du panier, l'écran graphique restitue la liste d'achats que le consommateur avait enregistrée sur le compte personnel du site par téléchargement, connu en soi, de cette liste de la liste mémorisée dans le serveur de gestion 12. Le consommateur n'a plus besoin de son téléphone mobile ou son PDA pour se rappeler de sa liste d'achats. Ceci permet également au centre commerçant, ayant accès aux programmations de listes d'achats enregistrées par leurs clients, de planifier son stock d'articles concernés.

Le paquet est transmis par voie filaire 13 vers le serveur 12 de gestion de listes d'achats de clients. Le serveur comporte une base de données 14 en temps réel comportant une compilation de tous les consommateurs ayant été identifiés dans l'hypermarché par un port de détection PD avec leur liste d'achats associée. Chaque détection a été reçue avec un entête PDi de port de détection. Ainsi, la base de données 14 comporte un champ 141 d'"Identifiant de consommateur", un champ 142 d'"Identifiant du port de détection" PDi, et un champ 143 de "Liste d'achats".

Le serveur comporte en outre une mémoire 15 mettant en relation pour chaque port de détection PDi un nombre d'articles correspondants (correspondant aux articles sur l'étalage du port de détection ou de son proche voisinage). Par exemple, pour le port de détection PD1 correspondent les articles 1, 2, 3 ; pour le port de détection PD2 correspondent les articles 1, 4, 6. Ainsi, la base de données 14 est renseignée, pour chaque consommateur identifié, sur sa liste d'achats précise et le nombre d'articles dans son proche voisinage. En plus, un champ "Profil étendu" 144 peut être également renseigné dans la base de données 14, reprenant les précédents achats réalisés lors de précédente visites, et pouvant enrichir les offres promotionnelles à lui suggérer.

Sur identité d'un article de son proche voisinage avec l'un des articles de la liste d'achats du consommateur, le module de traitement du serveur 12 envoie en temps réel, selon une stratégie commerciale propre à chaque enseigne commerciale et programmée dans le module de calcul, une offre promotionnelle traitée par le microprocesseur 5 pour être affichée sur l'écran 7.

Selon une variante de l'invention, pour éviter de placer des détecteurs de position à tous les étalages, il est utilisé l'information de localisation fournie par l'opérateur de téléphonie mobile concernant la position du téléphone mobile du consommateur (si tant est qu'il le porte sur lui-même évidemment ou qu'il soit logé dans la station du panier). Cette variante est illustrée dans l'encadré en pointillés 16. Le serveur 12 est relié par le réseau internet 17 à un serveur comportant une base de données de profil des abonnés de l'opérateur ainsi que leur position. Ce serveur 18 peut être logé dans le serveur HLR ("Home Location Register" en anglais) de l'opérateur de téléphonie mobile ou le VLR ("Visitor Location Register"). Ainsi, à intervalles de temps prédéterminés convenus entre le centre commerçant et l'opérateur ou sur requête du serveur de gestion, le serveur 18 de l'opérateur transmet au serveur de gestion 12 via le réseau internet 17 l'identifiant du consommateur (identifié par son nom et prénom au moins pour qu'il y ait possibilité de correspondance avec les données détenues en mémoire du serveur de gestion 12) et sa localisation précise. Cette localisation peut résulter d'une triangulation de stations de base radio WIMAX formant des picocellules ou Picocells en anglais, ou des Femtocellules.

## Revendications

1. Système de gestion d'offres promotionnelles à destination de consommateurs situés à proximité d'étalages d'un centre commerçant, **caractérisé en ce qu'**il comporte :
- des moyens de mémorisation (1) d'une liste d'achats d'articles de consommation prévue par au moins un consommateur,
- au moins un panier de chargement (2) destiné à contenir des articles de consommation situé sur des étalages (10) du centre commerçant,
- des moyens de localisation du consommateur (PD, 8, 9, 11) portant le panier,
- des moyens de détermination (12) d'offres promotionnelles en fonction de la localisation du panier et de la liste d'achats des articles de consommation prévue,
- et des moyens d'interfaçage (7) Consommateur-Machine de restitution de ces offres promotionnelles.

2. Système selon la revendication 1, **caractérisé en ce que** les moyens de localisation (PD, 8, 9, 11) du consommateur comprennent des moyens d'identification (4) du consommateur logés dans le panier, et des moyens de détection de la proximité du panier avec un étalage (10).

3. Système selon la revendication 2, **caractérisé en ce que** les moyens d'identification (4) du consommateur comprennent un lecteur (3) de carte (4) de fidélité du consommateur auprès du centre commerçant.

4. Système selon la revendication 2 ou 3, **caractérisé en ce que** les moyens de détection de la proximité du panier avec l'étalage (10) utilisent la technologie RFID.

5. Système selon l'une des revendications 1 à 4, **caractérisé en ce que** les moyens de mémorisation (1, 6) de la liste d'achats d'articles de consommation prévue par le consommateur comprennent un dispositif numérique (1) appartenant au consommateur et apte à coopérer avec des premiers moyens de traitement (5) du panier.

6. Système selon l'une des revendications 1 à 4, **caractérisé en ce que** les moyens de mémorisation (1, 6) de la liste d'achats d'articles de consommation prévue par le consommateur comprennent un site web du centre commerçant comprenant des moyens de traitement d'un compte personnel au consommateur pour mémoriser ladite liste d'achats.

7. Système selon la revendication 5 combinée à la revendication 2, **caractérisé en ce que** les premiers moyens de traitement sont agencés pour émettre, lors de la détection de la proximité du panier avec un étalage (10), un message comportant un identifiant du consommateur et la liste d'achats initialement mémorisée dans le dispositif numérique.

8. Système selon la revendication 7 combinée à la revendication 2, **caractérisé en ce que** les moyens de détection de la proximité du panier avec l'étalage (10) comprennent des seconds moyens de traitement (11) logés dans ledit étalage et aptes à inclure audit message un identifiant de localisation de la détection.

9. Système selon l'une des revendications 1 à 8, **caractérisé en ce que** les moyens de détermination (12) d'offres promotionnelles comprennent des troisièmes moyens de traitement agencés pour déterminer les offres promotionnelles personnalisées en fonction, d'une part, de la liste d'achats préétablies par le consommateur et, d'autre part, des articles se situant dans son proche voisinage.

10. Système selon la revendication 9, **caractérisé en ce que** les troisièmes moyens de traitement sont agencés pour déterminer les offres promotionnelles personnalisées en fonction également de données de profil incluant des articles qui ont fait l'objet de précédents achats par le consommateur.

11. Système selon la revendication 10, **caractérisé en ce que** les troisièmes moyens de traitement sont agencés pour déterminer les offres promotionnelles personnalisées en fonction des données de profil lorsque la liste d'achats du consommateur n'est pas récupérable ou n'a pas été fournie par le consommateur au préalable.

12. Procédé de gestion d'offres promotionnelles à destination de consommateurs situés à proximité d'étalages d'un centre commerçant, **caractérisé en ce que** le procédé comporte les étapes suivantes :
- une étape de mémorisation (1) d'une liste d'achats d'articles de consommation prévue par au moins un consommateur,
- une étape de fourniture d'au moins un panier de chargement (2) au consommateur et destiné à contenir des articles de consommation situé sur des étalages (10) du centre commerçant,
- une étape de localisation du consommateur (PD, 8, 9, 11) portant le panier,
- une étape de détermination (12) d'offres promotionnelles en fonction de la localisation du panier et de la liste d'achats des articles de consommation prévue,
- une étape de restitution de ces offres promotionnelles via des moyens d'interfaçage (7) Consommateur-Machine.
